# FASCICULE DE BREVET EUROPEEN

(11) **EP 1 688 331 B1**
(45) Date de publication et mention de la délivrance du brevet: **30.05.2007**
(21) Numéro de dépôt: 05290260.8
(22) Date de dépôt: 07.02.2005
(51) Int. Cl.: B60T 11/232

(54) **Ensemble maitre cylindre**
Hauptbremszylinderanordnung
Master brake cylinder

(43) Date de publication de la demande: 09.08.2006
(73) Titulaire: Delphi Technologies, Inc., Troy, MI 48007 (US)
(72) Inventeur: Loche, Jacques, 92600 Asnieres (FR); Castel, Philippe, 75005 Paris (FR)
(74) Mandataire: Laget, Jean-Loup

(56) Documents cités:
- EP-A- 0 601 769
- EP-A- 1 018 459
- FR-A- 2 134 082

## Description

La présente invention se rapporte aux ensembles maîtres cylindres de commande hydraulique, notamment pour la commande du freinage d'un véhicule.

On connaît, d'après FR2134082, un ensemble maître cylindre de commande hydraulique du type comprenant :
un corps de maître cylindre dans lequel est formé un alésage longitudinal débouchant au niveau d'une extrémité dudit corps de maître cylindre,
au moins un piston agencé dans ledit alésage et muni, d'une part, d'une garniture d'étanchéité qui est en contact étanche avec une paroi périphérique dudit alésage et qui sépare une chambre de pression et une chambre d'alimentation destinées à contenir un liquide dans ledit alésage et, d'autre part, d'un conduit de récupération reliant lesdites chambres en contournant ladite garniture d'étanchéité,
un clapet porté de manière mobile par ledit piston et sollicité élastiquement vers une position d'obturation dudit conduit de récupération,
un dispositif de butée retenu longitudinalement dans ledit alésage et apte à coopérer avec ledit clapet dans une position de repos prédéterminée dudit piston pour définir une position de repos correspondante ouverte dudit clapet.

Dans cet ensemble maître cylindre, le dispositif de butée doit assurer l'ouverture du conduit de récupération à la position de repos du piston. Le piston présente forcément, à partir de la position de repos, une certaine course morte au cours de laquelle sensiblement aucune pression de commande hydraulique n'est créée dans la chambre de pression, du fait que le conduit de récupération n'est pas obturé et que le liquide peut donc s'échapper dans la chambre d'alimentation à travers le conduit de récupération. Cette course morte correspond à une course de fermeture du clapet mobile porté par le piston.

Le dispositif de butée de cet ensemble maître cylindre est réglable, ce qui permet, lors de l'assemblage de l'ensemble maître cylindre, de soigneusement régler cette course morte pour satisfaire deux exigences. D'une part, il est souhaitable de minimiser cette course morte afin d'améliorer le temps de réponse de l'ensemble maître cylindre, ce qui est particulièrement sensible pour l'efficacité d'un système de freinage (une course morte au maître cylindre se traduisant par une distance parcourue du véhicule non freinée) et, le cas échéant, afin de limiter la course de la pédale de frein pour le confort de l'utilisateur. D'autre part, il faut assurer une ouverture satisfaisante du conduit de récupération lorsque le piston revient à sa position de repos, afin d'assurer que la pression dans la chambre de pression redescend jusqu'à une pression de référence, typiquement la pression atmosphérique, qui est maintenue dans la chambre d'alimentation grâce à un conduit d'alimentation. L'ouverture du conduit de récupération est aussi nécessaire pour que quand le circuit hydraulique en sortie de l'ensemble maître cylindre présente une fuite, le niveau de liquide dans le réservoir d'alimentation descende, ce qui permet de détecter la fuite.

Dans ce dispositif, même avec un réglage très fin il est donc impossible d'annuler complètement la course morte du piston à partir de sa position de repos. Ce dispositif n'offre donc pas une sécurité maximale ni un confort d'utilisateur optimal à cause d'un retard de réponse irréductible dû à cette course morte.

Le but de l'invention est de proposer un ensemble maître cylindre ne présentant pas au moins certains des inconvénients précités de l'art antérieur. Plus précisément, le but de l'invention est de proposer un ensemble maître cylindre dans lequel le temps de réponse est amélioré.

Pour cela, l'invention fournit un ensemble maître cylindre de commande hydraulique comprenant un corps de maître cylindre dans lequel est formé un alésage longitudinal, au moins un piston agencé dans ledit alésage et muni, d'une part, d'une garniture d'étanchéité qui est en contact étanche avec une paroi périphérique dudit alésage et qui sépare deux chambres destinées à contenir un liquide dans ledit alésage et, d'autre part, d'un conduit de récupération reliant lesdites chambres en contournant ladite garniture d'étanchéité, un clapet porté de manière mobile par ledit piston, caractérisé par le fait que ledit ensemble maître cylindre comprend un actionneur apte à régler la position prise par ledit clapet dans une position de repos prédéterminée dudit piston, ladite position du clapet étant réglable par ledit actionneur entre une position d'ouverture dudit conduit de récupération et une position d'obturation dudit conduit de récupération.

Ainsi, dans la position de repos du piston, lorsque l'actionneur positionne le clapet dans la position d'obturation, le piston ne présente pas de course morte étant donné que tout déplacement du piston va créer une pression dans la chambre de pression. Lorsque l'actionneur positionne le clapet dans la position d'ouverture, la pression dans la chambre de pression peut redescendre jusqu'à une pression de référence lorsque l'ensemble maître cylindre ne doit pas appliquer de pression de commande. De plus, s'il existe un détecteur de fuite basé sur le niveau de liquide dans le réservoir d'alimentation, les fuites peuvent toujours être détectées dans cette position d'ouverture.

De préférence, le clapet est sollicité élastiquement vers la position d'obturation, l'ensemble maître cylindre comprenant un dispositif de butée agencé dans l'alésage et apte à coopérer avec le clapet dans la position de repos du piston pour définir la position d'ouverture, le dispositif de butée étant réglable en position depuis l'extérieur du corps de maître cylindre, l'actionneur étant agencé à l'extérieur du corps de maître cylindre et coopérant avec le dispositif de butée, l'actionneur étant apte à positionner le dispositif de butée dans un premier état correspondant à la position d'ouverture et dans un deuxième état correspondant à la position d'obturation.

Avantageusement, le dispositif de butée présente une surface de came apte à coopérer avec le clapet pour déplacer le clapet depuis la position d'obturation jusqu'à la position d'ouverture lors d'un déplacement du dispositif de butée depuis le deuxième état jusqu'au premier état.

Selon un mode de réalisation particulier, ledit dispositif de butée comprend une goupille mobile en rotation présentant ladite surface de came, ledit actionneur étant apte à déplacer en rotation ladite goupille.

De préférence, la goupille est sensiblement cylindrique circulaire et présente un pan coupé définissant ladite surface de came, la surface périphérique de la goupille présentant une portion circulaire apte à coopérer avec le clapet dans le premier état du dispositif de butée, le pan coupé étant destiné à être tourné vers le clapet dans le deuxième état du dispositif de butée.

Ainsi, la goupille présente un faible encombrement.

Avantageusement, ledit pan coupé est présent sur une portion de la longueur de ladite goupille située en face du clapet.

Selon un mode de réalisation particulier, ledit actionneur comprend un moteur apte à solliciter un piston d'actionnement en translation et une manivelle apte à transformer le mouvement de translation dudit piston d'actionnement en un mouvement de rotation de ladite goupille.

De préférence, l'actionneur présente un premier état correspondant au premier état du dispositif de butée et un deuxième état correspondant au deuxième état du dispositif de butée, lesdits premier et deuxième état dudit actionneur étant des états stables.

Avantageusement, ledit actionneur est électrique.

Selon un mode de réalisation particulier, le moteur comprend un solénoïde coaxial avec un piston d'actionnement, le piston d'actionnement étant au moins partiellement agencé dans le solénoïde et étant mobile en translation selon l'axe du solénoïde.

De préférence, ladite position de repos prédéterminée dudit piston est une position de butée dudit piston définie par rapport audit corps de maître cylindre.

La position de repos du piston est alors précisément définie. Dans le cas d'un clapet qui s'ouvre par coopération avec un dispositif de butée, la position d'ouverture du clapet et donc le degré d'ouverture du conduit de récupération dépendent de la position du piston. Ici, il est donc possible de précisément dimensionner ce degré d'ouverture.

L'invention fournit également un système de freinage pour véhicule, caractérisé par le fait qu'il comprend un ensemble maître cylindre selon l'invention ci-dessus, au moins un capteur pour déterminer la valeur d'au moins une variable d'état et un contrôleur électronique apte à commander ledit actionneur en fonction d'un état instantané dudit véhicule défini par ladite au moins une variable d'état.

Plusieurs types de contrôles peuvent être mis en oeuvre dans un tel système. Une première possibilité est de considérer que l'actionneur doit par défaut positionner le clapet en position d'ouverture. Dans ce cas, on ne commande l'actionneur pour régler le clapet en position d'obturation que lorsque des conditions particulières (état logique d'obturation) sont réunies. Une autre possibilité est de considérer que l'actionneur doit par défaut positionner le clapet en position d'obturation. Dans ce cas, on ne commande l'actionneur pour régler le clapet en position d'ouverture que lorsque des conditions particulières (état logique d'ouverture) sont réunies. Ces deux approches peuvent aussi être combinées, auquel cas il n'y a pas vraiment de position par défaut.

L'invention propose également un procédé d'exploitation d'un système de freinage selon l'invention ci-dessus, dans lequel ledit contrôleur électronique effectue les étapes consistant à : déterminer ledit état instantané dudit véhicule à partir des mesures dudit au moins un capteur ; éprouver la présence d'au moins un état logique d'obturation, chaque état logique d'obturation étant défini par le fait que ladite au moins une variable d'état remplit une ou plusieurs conditions d'obturation ; lorsque ledit état instantané dudit véhicule correspond à un état logique d'obturation, commander ledit actionneur pour régler ledit clapet en position d'obturation.

Avantageusement, ledit système de freinage comprend un capteur de pression apte à mesurer une pression hydraulique en sortie dudit ensemble maître cylindre, une condition logique d'obturation étant une condition de pression, condition qui est vérifiée lorsque la valeur émise par ledit capteur de pression est inférieure à un seuil de pression prédéterminé. Ainsi, on peut par exemple autoriser l'obturation du conduit de récupération uniquement lorsqu'une telle condition est satisfaite à la position de repose du piston.

Selon un mode de réalisation particulier, le système de freinage comprend un capteur d'allumage apte à déterminer l'état d'un contact d'allumage du véhicule, une condition logique d'obturation étant une condition d'allumage, condition qui est vérifiée lorsque la valeur émise par le capteur d'allumage indique que le contact d'allumage du véhicule est allumé.

L'invention propose également un procédé d'exploitation d'un système de freinage selon l'invention ci-dessus, dans lequel ledit contrôleur électronique effectue les étapes consistant à : déterminer ledit état instantané dudit véhicule à partir des mesures dudit au moins un capteur ; éprouver la présence d'au moins un état logique d'ouverture, chaque état logique d'ouverture étant défini par le fait que ladite au moins une variable d'état remplit une ou plusieurs conditions d'ouverture ; lorsque ledit état instantané dudit véhicule correspond à un état logique d'ouverture, commander ledit actionneur pour régler ledit clapet en position d'ouverture.

De préférence, le système de freinage comprend un capteur de pression apte à mesurer une pression hydraulique en sortie du ensemble maître cylindre, une condition logique d'ouverture étant une condition de pression, condition qui est vérifiée lorsque la valeur émise par le capteur de pression est supérieure à un seuil de pression prédéterminé. Ainsi, on peut par exemple autoriser l'ouverture du conduit de récupération uniquement lorsqu'une telle condition est satisfaite à la position de repose du piston.

Avantageusement, le système de freinage comprend un capteur d'allumage apte à déterminer l'état d'un contact d'allumage du véhicule, un état logique d'ouverture étant défini par une condition logique d'ouverture qui est une condition d'allumage, condition qui est vérifiée lorsque la valeur émise par le capteur d'allumage indique que le contact d'allumage du véhicule est éteint.

Ainsi, quand le contact d'alimentation du véhicule est éteint pour laisser le véhicule en stationnement, et si le circuit hydraulique en sortie de l'ensemble maître cylindre présente une fuite, le niveau de liquide dans le réservoir d'alimentation descend du fait que le clapet est maintenu en position ouverte. La fuite pourra donc être détectée sur base du niveau de liquide dans le réservoir.

Selon un mode de réalisation particulier, ledit système de freinage comprend un capteur de freinage apte à déterminer la position d'une pédale de frein du véhicule et un capteur de pression apte à mesurer une pression hydraulique en sortie dudit ensemble maître cylindre, un état logique d'ouverture étant défini par l'intersection entre au moins une condition logique d'ouverture qui est une condition de freinage, condition qui est vérifiée lorsque la valeur émise par ledit capteur de freinage indique que ladite pédale de freinage est en position relâchée, et une condition logique d'ouverture qui est une condition de pression, condition qui est vérifiée lorsque la valeur émise par ledit capteur de pression est supérieure à un seuil de pression prédéterminée.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue partielle coupe longitudinale axiale d'un ensemble maître cylindre selon un mode de réalisation de l'invention, avec un clapet dans une position d'obturation ;
- la figure 2 est une vue analogue de l'ensemble maître cylindre de la figure 1, avec un clapet dans une position d'ouverture ;
- la figure 3 est une coupe transversale d'une goupille présente dans l'ensemble maître cylindre de la figure 1 ;
- la figure 4 est une vue du dessous de l'ensemble maître cylindre de la figure 1 ; et
- la figure 5 représente les étapes d'un programme de commande de l'ensemble maître cylindre de la figure 1.

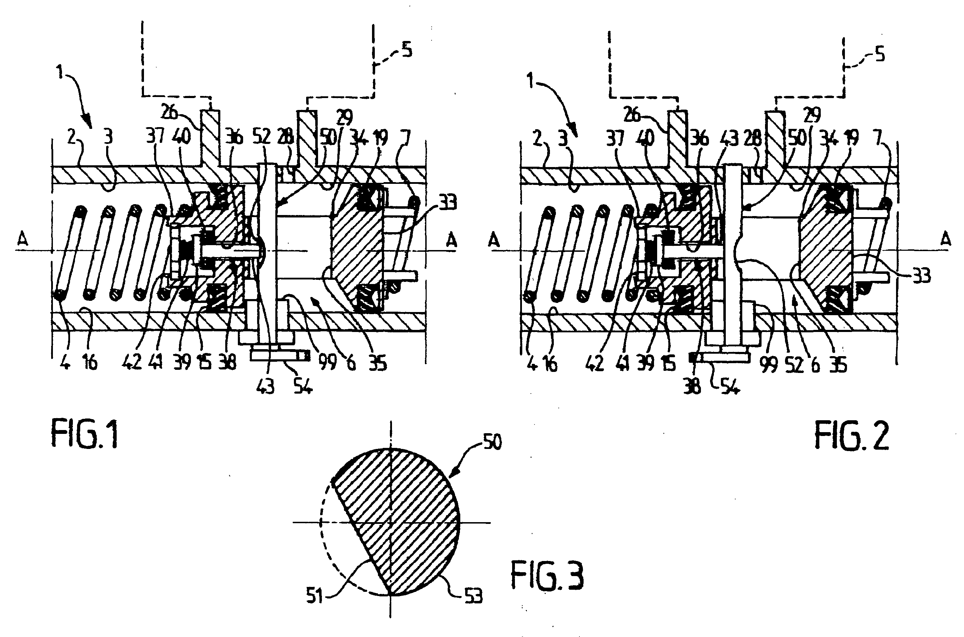

La figure 1 représente partiellement un ensemble maître cylindre 1 de type tandem, au niveau d'un ensemble piston secondaire 6, dans une position de repos. L'ensemble maître cylindre 1 permet la commande de freinage d'un véhicule automobile. Le corps de maître cylindre 2 est métallique et présente globalement une forme de révolution autour de l'axe longitudinal A avec un alésage cylindrique 3 d'axe A débouchant à une extrémité arrière du corps de maître cylindre 2. De manière conventionnelle, on définit l'axe A comme étant un axe avant-arrière, l'avant se trouvant sur la gauche de la figure 1 et l'arrière sur la droite de la figure 1. Ces appellations « avant » et « arrière » ne font pas référence à l'environnement de l'ensemble maître cylindre 1 et peuvent coïncider, mais ne coïncident pas nécessairement, avec ce qu'on appelle « avant » et « arrière » dans l'environnement de l'ensemble maître cylindre 1 lorsque celui-ci est monté dans un véhicule.

Dans l'alésage 3 sont introduits successivement un ressort secondaire 4 qui prend appui sur une paroi d'extrémité avant (non représentée) de l'alésage 3, un ensemble piston secondaire 6 dont l'extrémité avant prend appui sur le ressort secondaire 4, un ressort primaire 7 et un ensemble piston primaire. L'ensemble piston primaire étant agencé de manière similaire à l'ensemble piston secondaire 6, il n'est ni décrit en détail ni représenté.

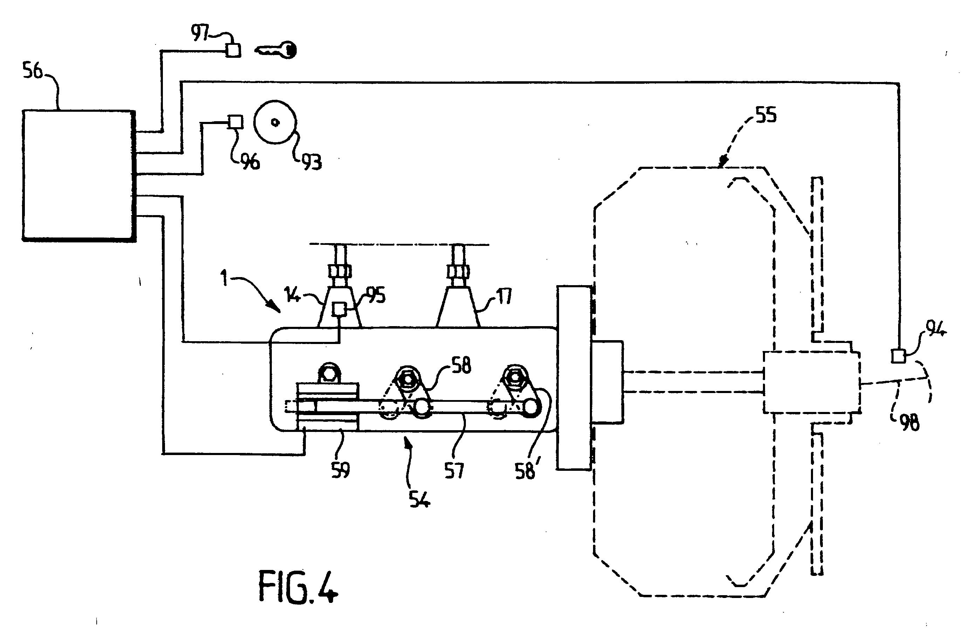

Sur sa surface extérieure, le corps de maître cylindre 2 présente une douille de sortie de pression secondaire 14 représentée figure 4, destinée à être reliée à un organe hydraulique à commander, par exemple un étrier de freinage, et débouchant dans une chambre de pression secondaire 16 formée dans l'alésage 3 entre la paroi d'extrémité avant du corps 2 et la coupelle d'étanchéité 15 de l'ensemble piston secondaire 6. Une douille de sortie de pression primaire 17 représentée figure 4, également destinée à être reliée à un organe hydraulique à commander, débouche dans une chambre de pression primaire 18 formée dans l'alésage 3 entre la coupelle d'étanchéité 19 de l'ensemble piston secondaire 6 et le piston primaire.

Un bossage d'alimentation secondaire 26 est muni d'une douille de connexion (non représentée) destinée à être raccordée au réservoir de liquide de frein 5 et est relié à l'alésage 3 par un conduit d'alimentation secondaire 28 qui débouche dans l'alésage 3 en permanence dans une chambre d'alimentation secondaire 29 située entre les coupelles d'étanchéité 15 et 19 de l'ensemble piston secondaire 6. Grâce au conduit 28, la pression hydraulique de la chambre 29 correspond à celle du réservoir 5, typiquement la pression atmosphérique.

L'ensemble piston secondaire 6 comporte un corps longitudinal 33 qui porte les coupelles d'étanchéité 15 et 19 respectivement au niveau de son extrémité avant et de son extrémité arrière et qui, entre les coupelles d'étanchéité 15 et 19, présente une portion centrale 34 de plus petit diamètre qui est traversée transversalement d'une rainure longitudinale 35. La chambre d'alimentation secondaire 29 inclut l'espace libre autour de la portion centrale 34 et l'intérieur de la rainure 35.

Le corps longitudinal 33 est percé d'un conduit de récupération longitudinal 36 qui débouche sur la face frontale de l'ensemble piston secondaire 6 et dans la rainure 35 et relie ainsi la chambre de pression secondaire 16 à la chambre d'alimentation secondaire 29 en contournant la coupelle d'étanchéité 15. Le conduit 36 peut être coaxial avec l'alésage 3, mais cela n'est pas nécessaire. L'ensemble 6 est prolongé vers l'avant par une douille cylindrique 37 dans laquelle est logé un ressort 41 prenant appui sur une rondelle 42 fixée à la douille 37 et sur un clapet mobile 38. Le clapet 38 comprend une tête de clapet 39, une garniture d'étanchéité 40 fixée à la tête 39, et se prolonge longitudinalement vers l'arrière par une tige d'ouverture 43 qui traverse le conduit 36 jusqu'à l'intérieur de la rainure 35 et est guidée longitudinalement dans le conduit 36. Le ressort 41 sollicite le clapet mobile 38 vers l'arrière vers une position d'obturation du conduit 36.

Une goupille de butée 50 est retenue longitudinalement dans l'alésage 3, et traverse la chambre 29 et la rainure 35. La goupille 50 est cylindrique circulaire, et peut se déplacer en rotation. Elle présente, sur une portion de sa longueur située au niveau du clapet 38, une encoche 52. La figure 3 représente une coupe transversale de la goupille 50, au niveau de l'encoche 52. A ce niveau, le périmètre de la goupille 50 comprend un secteur circulaire 53 qui constitue, avec le fond 51 de l'encoche 52, une surface de came.

La figure 1 représente l'ensemble maître cylindre 1 avec la goupille 50 dans une position permettant l'obturation du conduit 36 lorsque l'ensemble piston secondaire 6 est dans sa position de repos. Dans sa position de repos, l'ensemble piston secondaire 6 est en butée contre une bague 99 fixée dans le corps de maître cylindre 2 autour de la goupille 50. Dans cette configuration, l'encoche 52 est tournée vers la tige 43 du clapet 38 et la tige 43 pénètre dans l'encoche 52 sans entrer en contact avec la goupille 50. Ainsi, le clapet 38, sollicité par le ressort 41 dans sa position d'obturation, obture le conduit 36. Si l'ensemble piston secondaire 6 est sollicité vers l'avant, la pression hydraulique augmentera directement dans la chambre 16. Il n'y a pas de course morte.

Un actionneur 54, représenté partiellement sur la figure 1 et qui sera décrit en détail en référence à la figure 4, permet de faire tourner la goupille 50 dans une autre position telle que l'encoche 52 ne se trouve pas en face de la tige 43. Pour plus de clarté, l'encoche 52 a été représentée sur la figure 2 du côté opposé à la tige 43, cependant en réalité il suffit qu'elle se trouve tournée d'un angle plus petit, par exemple d'environ 90 degrés, par rapport à la position de la figure 1.

La figure 2 représente l'ensemble maître cylindre 1 avec l'encoche 52 tournée du côté opposé à la tige 43 et l'ensemble piston secondaire 6 dans sa position de repos. Dans cette configuration, la tige 43 est en butée contre la surface extérieure de la goupille 50, au niveau du secteur circulaire 53. Lors d'une rotation de la goupille 50 correspondant au passage de la position de la figure 1 à la position de la figure 2, lorsque l'ensemble 6 est en position de repos, la surface de came 51 et 53 transforme le mouvement de rotation de la goupille 50 en un mouvement de translation vers l'avant de la tige 43. Ainsi, dans la configuration de la figure 2, le clapet 38 se trouve dans sa position ouverte et la pression hydraulique de la chambre 16 est ramenée à celle de la chambre 29.

Par ailleurs, si le circuit hydraulique connecté à la douille 14 présente une fuite, le niveau du liquide dans le réservoir 5 descend, ce qui permet de détecter la fuite.

La figure 4 représente une vue de dessous de l'ensemble maître cylindre 1. L'ensemble 1 comprend un actionneur 54 fixé en dessous et à l'extérieur du corps de maître cylindre 2. L'ensemble 1 est fixé par une bride de fixation 30 qui fait saillie latéralement au niveau de l'arrière du corps de maître cylindre 2 sur une paroi de carter avant d'un servomoteur d'amplification 55 connu en soi, esquissée en trait interrompu, qui est lui-même commandé à l'aide d'une pédale de frein 98.

L'actionneur comprend une tige de piston 57 dont l'axe est parallèle avec l'axe A. La tige 57 est mobile en translation et peut se déplacer entre deux positions de fin de course prédéfinies, par exemple par des moyens de butée ou de retenue non représentés. Une manivelle 58 est solidaire en rotation de la goupille 50. La manivelle coopère avec la tige 57 pour transformer le mouvement de translation de la tige 57 en un mouvement de rotation de la goupille 50. Ainsi, un mouvement de translation de la tige 57 d'une des ses positions de fin de course à l'autre permet de faire passer la goupille 50 de la position de la figure 1 à la position de la figure 2, et inversement. De façon similaire, une manivelle 58' permet de faire tourner une goupille située au niveau de l'ensemble piston primaire.

L'actionneur 54 comprend également un solénoïde 59 coaxial avec la tige 57, et dans lequel la tige 57 pénètre partiellement. Un contrôleur 56 est apte à faire passer un courant électrique dans un sens ou dans un autre dans le solénoïde 59, ce qui a pour effet de déplacer la tige 57 en translation dans un sens ou dans un autre afin de la faire passer d'une de ses positions de fin de course à l'autre.

En l'absence de courant dans le solénoïde, les moyens de butée ou de retenue maintiennent la tige 57 en position. En d'autres mots, les positions de fin de course de la tige 57 sont des positions stables.

Alternativement, un ressort pourrait solliciter élastiquement la tige 57 dans la position correspondant à la figure 2 qui serait la position par défaut. Dans ce cas le contrôleur devrait faire passer du courant dans le solénoïde 59 pour déplacer et maintenir la tige 57 dans la position correspondant à la figure 1, qui serait une position instable. Ce mode de réalisation alternatif offre une sécurité accrue puisque le clapet 38 peut s'ouvrir même en cas de défaillance de l'actionneur.

L'ensemble 1 est intégré dans un système de freinage pour véhicule. Le système de freinage comprend le contrôleur 56 qui permet de commander l'actionneur 54. Le contrôleur 56 reçoit les signaux de plusieurs capteurs.

Un capteur d'allumage 97 permet de déterminer si le contact d'allumage dudit véhicule est allumé. Quand on coupe le contact, l'alimentation du contrôleur 56 est maintenue pendant une durée déterminée pendant laquelle le capteur d'allumage 97 indique au contrôleur 56 que le contact est coupé. Pendant cette durée déterminée, le contrôleur 56 peut prendre en compte cette information pour commander l'actionneur 54. Le capteur d'allumage 97 fournit un signal IGN binaire prenant la valeur ON quand le contact est allumé et la valeur OFF quand le contact est éteint.

Un capteur de freinage 94 permet de déterminer la position de la pédale de frein 98 du véhicule. Le capteur de freinage fournit un signal BS binaire prenant la valeur ON quand la pédale de frein est enfoncée et la valeur OFF quand la pédale de frein est complètement relâchée.

Un capteur de pression 95 permet de mesurer la pression hydraulique en sortie de l'ensemble maître cylindre 1, au niveau de la douille de sortie 14 ou 17. Normalement ces pressions sont égales et un seul capteur de pression suffit. De préférence, en variante il y a deux capteurs de pression, un à chaque douille de sortie, afin de disposer d'une mesure de pression fiable même en cas de fuite dans un des deux circuits hydrauliques. Les capteurs de pressions fournissent des signaux analogiques d'amplitude proportionnelle à la pression. Le contrôleur 56 transforme ces signaux en deux valeurs numériques et sélectionne la valeur P la plus élevée.

Des capteurs de vitesse de roue 96 permettent de déterminer si chacune des roues 93 du véhicule est en rotation. Le capteur de vitesse de roue fournit un signal WS binaire prenant la valeur ON si la roue est en rotation et la valeur OFF si la roue est à l'arrêt.

Le contrôleur 56 exécute un programme de commande de l'ensemble 1. Ce programme détermine la position que doit prendre la goupille 50 en fonction des signaux fournis par les capteurs et commande le solénoïde 59 pour positionner la goupille 50 dans la position déterminée.

### Exemple

Pour illustrer un exemple particulier de réalisation de l'invention, la table 1 donne la position déterminée par le programme de commande en fonction des signaux fournis par les capteurs. Dans cette table, P1 et P2 signifient les positions représentées respectivement sur la figure 1 et la figure 2, et P0 est une valeur prédéterminée mémorisée par le contrôleur 56, correspondant à un seuil de pression. P0 est choisi légèrement supérieure à la pression atmosphérique, par exemple autour de 1,3 à 1,4 bar.

**Table 1.**

| | **P1** | **P2** | **P1** | **P2** |
|---|---|---|---|---|
| **IGN** | ON | OFF | ON | ON |
| **BS** | OFF | | OFF | OFF |
| **P** | P<P0 | | P<P0 | P>P0 |
| **WS** | OFF | OFF | ON | ON |

Les deux premières colonnes se rapportent au véhicule à l'arrêt (WS=OFF), alors que les deux dernières colonnes se rapportent au véhicule en mouvement (WS=ON). Les cases vides signifient que la valeur du signal est indifférente.

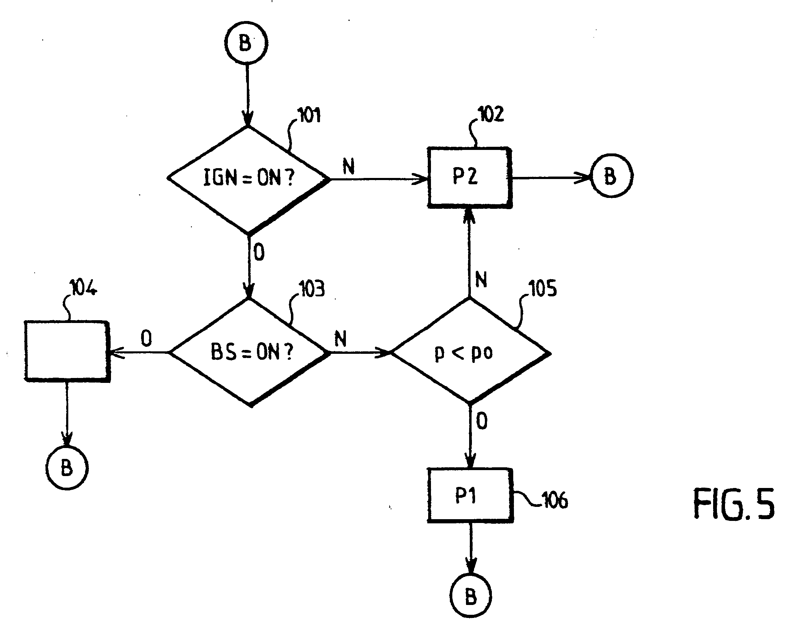

La figure 5 représente les étapes du programme de commande correspondant à cet exemple. L'exécution du programme démarre au point d'entrée B et passe en suite à l'étape 101.

A l'étape 101, le programme teste si le signal fourni par le capteur d'allumage 97 indique que le contact est allumé. Si ce n'est pas le cas, le programme passe à l'étape 102. Si c'est le cas, le programme passe à l'étape 103.

A l'étape 102, le contrôleur 56 commande l'actionneur 54 pour positionner la goupille 50 dans la position P2, puis le programme retourne au point B.

A l'étape 103, le programme teste si le signal fourni par le capteur de freinage 94 indique que la pédale de frein est enfoncée. Si c'est le cas, le programme passe à l'étape 104, sinon il passe à l'étape 105.

A l'étape 104, le contrôleur 56 laisse l'actionneur 54 dans son état actuel, puis le programme retourne au point B.

Selon une autre variante, à l'étape 104 le contrôleur 56 commande l'actionneur 54 pour positionner la goupille 50 dans la position P1, puis le programme retourne au point B. Ainsi, lorsqu'on relâche la pédale de frein puis qu'on l'enfonce de nouveau directement, la goupille 50 est dans la position correspondant à l'absence de course morte.

A l'étape 105, le programme compare la valeur P à la valeur P0 pour déterminer si la pression est inférieure au seuil de pression. Si c'est le cas, le programme passe à l'étape 106, sinon il passe à l'étape 102.

A l'étape 106, le contrôleur 56 commande l'actionneur 54 pour positionner la goupille 50 dans la position P1, puis le programme retourne au point B.

Les tests effectués lors de l'exécution de ce programme permettent de déterminer un état instantané du véhicule, pour ensuite déterminer un état cible de la goupille 50 et générer un signal de commande du solénoïde 59 afin de positionner la goupille 50 dans l'état cible. Par exemple, à l'étape 106, l'état instantané du véhicule défini par les conditions (IGN = ON) et (BS = ON) et (P < P0) correspond à l'état cible P1.

On a décrit un ensemble maître cylindre tandem dont les deux ensembles pistons comprennent chacun un clapet, et un actionneur apte à régler la position des deux clapets. Alternativement, l'invention est applicable à la réalisation d'un maître cylindre tandem ne comportant qu'une seule goupille réglable ou à un ensemble maître cylindre ne comportant qu'un seul piston.

On a décrit une goupille mobile en rotation présentant une surface de came définie par le fond d'une encoche. Alternativement, la surface de came pourrait être définie par un excentrique. La goupille pourrait être mobile en translation et présenter une portion conique apte à coopérer avec le clapet lors d'un mouvement de translation et définissant la surface de came.

En référence à la figure 1, on a décrit que la tige du clapet n'est pas en contact avec la goupille. Alternativement la tige pourrait être en contact ajusté avec la goupille, sans que la goupille n'exerce une force tendant à déplacer le clapet dans sa position d'ouverture.

Dans un mode de réalisation simplifié, le programme de commande pourrait n'utiliser que certaines des variables d'état décrites ci-dessus. Par exemple, le procédé illustré à la figure 5 pourrait être simplifié en supprimant les étapes 101 et 103. Selon un autre exemple, le programme pourrait n'utiliser que le signal fourni par le capteur d'allumage, pour positionner la goupille dans la position de la figure 1 lorsque le signal fournit par le capteur d'allumage indique que le contact est allumé et dans la position de la figure 2 lorsque le signal fournit par le capteur d'allumage indique le contact est éteint. Alternativement, le programme de commande pourrait utiliser des variables supplémentaires par rapport à celles décrites, comme le signal de vitesse de roue.

Le contrôleur électronique 56 peut être réalisé sous une forme centralisée ou sous une forme distribuée ; à l'aide de composants matériels spécifiques ou de composants matériels standards programmés de manière spécifique, ou encore d'une combinaison de tels moyens.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Ensemble maître cylindre de commande hydraulique (1) comprenant un corps de maître cylindre (2) dans lequel est formé un alésage longitudinal (3), au moins un piston (6) agencé dans ledit alésage (3) et muni, d'une part, d'une garniture d'étanchéité (15) qui est en contact étanche avec une paroi périphérique dudit alésage (3) et qui sépare deux chambres (16, 29) destinées à contenir un liquide dans ledit alésage (3) et, d'autre part, d'un conduit de récupération (36) reliant lesdites chambres (16, 29) en contournant ladite garniture d'étanchéité (15), un clapet (38) porté de manière mobile par ledit piston (6), **caractérisé par le fait que** ledit ensemble maître cylindre (1) comprend un actionneur (54) apte à régler la position prise par ledit clapet (38) dans une position de repos prédéterminée dudit piston (6), ladite position du clapet (38) étant réglable par ledit actionneur (54) entre une position d'ouverture dudit conduit de récupération (36) et une position d'obturation dudit conduit de récupération (36).

2. Ensemble maître cylindre selon la revendication 1,
**caractérisé par le fait que** ledit clapet (36) est sollicité élastiquement vers ladite position d'obturation, ledit ensemble maître cylindre comprenant un dispositif de butée (50) agencé dans ledit alésage (3) et apte à coopérer avec ledit clapet (38) dans ladite position de repos dudit piston (6) pour définir ladite position d'ouverture, ledit dispositif de butée (50) étant réglable en position depuis l'extérieur dudit corps de maître cylindre (2), ledit actionneur (54) étant agencé à l'extérieur dudit corps de maître cylindre (2) et coopérant avec ledit dispositif de butée (50), ledit actionneur (54) étant apte à positionner ledit dispositif de butée (50) dans un premier état correspondant à ladite position d'ouverture et dans un deuxième état correspondant à ladite position d'obturation.

3. Ensemble maître cylindre selon la revendication 2, **caractérisé en ce que** ledit dispositif de butée (50) présente une surface de came (51, 53) apte à coopérer avec ledit clapet (38) pour déplacer ledit clapet (38) depuis ladite position d'obturation jusqu'à ladite position d'ouverture lors d'un déplacement dudit dispositif de butée (50) depuis ledit deuxième état jusqu'audit premier état.

4. Ensemble maître cylindre selon la revendication 3, **caractérisé par le fait que** ledit dispositif de butée comprend une goupille (50) mobile en rotation présentant ladite surface de came (51, 53), ledit actionneur (54) étant apte à déplacer en rotation ladite goupille (50).

5. Ensemble maître cylindre selon la revendication 4, **caractérisé en ce que** ladite goupille (50) est sensiblement cylindrique circulaire et présente un pan coupé (51) définissant ladite surface de came, la surface périphérique de ladite goupille présentant une portion circulaire (53) apte à coopérer avec ledit clapet dans ledit premier état dudit dispositif de butée, ledit pan coupé (51) étant destiné à être tourné vers ledit clapet (38) dans ledit deuxième état dudit dispositif de butée.

6. Ensemble maître cylindre selon la revendication 5, **caractérisé par le fait que** ledit pan coupé (51) est présent sur une portion (52) de la longueur de ladite goupille (50) située en face du clapet (38).

7. Ensemble maître cylindre selon l'une des revendications 4 à 6, **caractérisé par le fait que** ledit actionneur (54) comprend un moteur (59) apte à solliciter un piston d'actionnement (57) en translation et une manivelle (58, 58') apte à transformer le mouvement de translation dudit piston d'actionnement (57) en un mouvement de rotation de ladite goupille (50).

8. Ensemble maître cylindre selon l'une des revendications 2 à 7, **caractérisé par le fait que** ledit actionneur (54) présente un premier état correspondant audit premier état dudit dispositif de butée (50) et un deuxième état correspondant audit deuxième état dudit dispositif de butée (50), lesdits premier et deuxième état dudit actionneur étant des états stables.

9. Ensemble maître cylindre selon l'une des revendications 1 à 8, **caractérisé en ce que** ledit actionneur (54) est électrique.

10. Ensemble maître cylindre selon la revendication 9, **caractérisé en ce que** ledit moteur comprend un solénoïde (59) coaxial avec un piston d'actionnement (57), ledit piston d'actionnement (57) étant au moins partiellement agencé dans ledit solénoïde (59) et étant mobile en translation selon l'axe dudit solénoïde (59).

11. Ensemble maître cylindre selon l'une des revendications 1 à 10, **caractérisé par le fait que** ladite position de repos prédéterminée dudit piston (6) est une position de butée dudit piston définie par rapport audit corps de maître cylindre (2).

12. Système de freinage pour véhicule, **caractérisé par le fait qu'**il comprend un ensemble maître cylindre (1) selon l'une des revendications 1 à 11, au moins un capteur (94, 95, 96, 97) pour déterminer la valeur d'au moins une variable d'état (IGN, BS, P, WS) et un contrôleur électronique (56) apte à commander ledit actionneur en fonction d'un état instantané dudit véhicule défini par ladite au moins une variable d'état.

13. Procédé d'exploitation d'un système de freinage selon la revendication 12 dans lequel ledit contrôleur électronique (56) effectue les étapes consistant à : déterminer ledit état instantané dudit véhicule à partir des mesures dudit au moins un capteur (94, 95, 96, 97) ; éprouver la présence d'au moins un état logique d'obturation, chaque état logique d'obturation étant défini par le fait que ladite au moins une variable d'état remplit une ou plusieurs conditions d'obturation (101, 103, 105) ; lorsque ledit état instantané dudit véhicule correspond à un état logique d'obturation, commander ledit actionneur pour régler ledit clapet en position d'obturation (106).

14. Procédé d'exploitation selon la revendication 13, **caractérisé par le fait que** ledit système de freinage comprend un capteur de pression (95) apte à mesurer une pression hydraulique en sortie dudit ensemble maître cylindre (1), une condition logique d'obturation étant une condition de pression, condition qui est vérifiée lorsque la valeur émise par ledit capteur de pression (95) est inférieure à un seuil de pression prédéterminé (P0).

15. Procédé d'exploitation selon la revendication 14, **caractérisé par le fait que** ledit système de freinage comprend un capteur d'allumage (97) apte à déterminer l'état d'un contact d'allumage dudit véhicule, une condition logique d'obturation étant une condition d'allumage, condition qui est vérifiée lorsque la valeur émise par ledit capteur d'allumage (97) indique que ledit contact d'allumage dudit véhicule est allumé.

16. Procédé d'exploitation d'un système de freinage selon la revendication 12 dans lequel ledit contrôleur électronique (56) effectue les étapes consistant à : déterminer ledit état instantané dudit véhicule à partir des mesures dudit au moins un capteur (94, 95, 96, 97) ; éprouver la présence d'au moins un état logique d'ouverture, chaque état logique d'ouverture étant défini par le fait que ladite au moins une variable d'état remplit une ou plusieurs conditions d'ouverture (101, 103, 105) ; lorsque ledit état instantané dudit véhicule correspond à un état logique d'ouverture, commander ledit actionneur pour régler ledit clapet en position d'ouverture (102).

17. Procédé d'exploitation selon la revendication 16, **caractérisé par le fait que** ledit système de freinage comprend un capteur de pression (95) apte à mesurer une pression hydraulique en sortie dudit ensemble maître cylindre (1), une condition logique d'ouverture étant une condition de pression, condition qui est vérifiée lorsque la valeur émise par ledit capteur de pression est supérieure à un seuil de pression prédéterminé (P0).

18. Procédé d'exploitation selon la revendication 16 ou la revendication 17, **caractérisé par le fait que** ledit système de freinage comprend un capteur d'allumage (97) apte à déterminer l'état d'un contact d'allumage dudit véhicule, un état logique d'ouverture étant défini par une condition logique d'ouverture qui est une condition d'allumage, condition qui est vérifiée lorsque la valeur émise par ledit capteur d'allumage (97) indique que ledit contact d'allumage dudit véhicule est éteint.

19. Procédé d'exploitation selon l'une des revendications 16 à 18, **caractérisé par le fait que** ledit système de freinage comprend un capteur de freinage (94) apte à déterminer la position d'une pédale de frein (98) du véhicule et un capteur de pression (95) apte à mesurer une pression hydraulique en sortie dudit ensemble maître cylindre, un état logique d'ouverture étant défini par l'intersection entre au moins une condition logique d'ouverture qui est une condition de freinage, condition qui est vérifiée lorsque la valeur émise par ledit capteur de freinage (98) indique que ladite pédale de freinage est en position relâchée, et une condition logique d'ouverture qui est une condition de pression, condition qui est vérifiée lorsque la valeur émise par ledit capteur de pression (95) est supérieure à un seuil de pression prédéterminée (P0).

## Claims

1. Master-cylinder assembly for hydraulic control (1) comprising a master-cylinder body (2) in which a longitudinal bore (3) is formed, at least one piston (6) arranged in the said bore (3) and provided, on the one hand, with a seal packing (15) which is in tight contact with a peripheral wall of the said bore (3) and which separates two chambers (16, 29) intended to contain a liquid in the said bore (3) and, on the other, a recovery conduit (36) connecting the said chambers (16, 29) bypassing the said seal packing (15) and a valve (38) moveably carried by the said piston (6), **characterised by** the fact that the said master-cylinder assembly (1) includes an actuator (54) able to adjust the position adopted by the said valve (38) in a predetermined rest position of the said piston (6), the said position of the valve (38) being adjustable by the said actuator (54) between a position opening the said recovery conduit (36) and a position closing the said recovery conduit (36).

2. Master-cylinder assembly as described in claim 1, **characterised by** the fact that the said valve (36) is elastically biased towards the said closing position, the said master-cylinder assembly including a stop device (50) arranged in the said bore (3) and able to co-operate with the said valve (38) in the said rest position of the said piston (6) to define the said opening position, the said stop device (50) being adjustable in position from the outside of the said master-cylinder body (2), the said actuator (54) being arranged outside the said master-cylinder body (2) and co-operating with the said stop device (50), the said actuator (54) being able to position the said stop device (50) in a first state corresponding to the said opening position and in a second state corresponding to the said closing position.

3. Master-cylinder assembly as described in claim 2, **characterised by** the fact that the said stop device (50) presents a cam surface (51, 53) able to co-operate with the said valve (38) to displace the said valve (38) from the said closing position to the said opening position on displacement of the said stop device (50) from the said second state to the said first state.

4. Master-cylinder assembly as described in claim 3, **characterised by** the fact that the said stop device comprises a pin (50) moveable in rotation presenting the said cam surface (51, 53), the said actuator (54) being able to displace the said pin (50) in rotation.

5. Master-cylinder assembly as described in claim 4, **characterised by** the fact that the said pin (50) is substantially circularly cylindrical and presents a cut flat (51) defining the said cam surface, the peripheral surface of the said pin presenting a circular portion (53) able to co-operate with the said valve in the said first state of the said stop device, the said cut flat (51) being intended to be turned towards the said valve (38) in the said second state of the said stop device.

6. Master-cylinder assembly as described in claim 5, **characterised by** the fact that the said cut flat (51) is present on a portion (52) of the length of the said pin (50) situated facing the valve (38).

7. Master-cylinder assembly as described in one of claims 4 to 6, **characterised by** the fact that the said actuator (54) comprises a motor (59) able to bias a activating piston (57) in translation and a crank (58, 58') able to transform the movement of translation of the said activating piston (57) into a movement of rotation of the said pin (50).

8. Master-cylinder assembly as described in one of claims 2 to 7, **characterised by** the fact that the said actuator (54) presents a first state corresponding to the said first state of the said stop device (50) and a second state corresponding to the said second state of the said stop device (50), the said first and second states of the said actuator being stable states.

9. Master-cylinder assembly as described in one of claims 1 to 8, **characterised by** the fact that the said actuator (54) is electrical.

10. Master-cylinder assembly as described in claim 9, **characterised by** the fact that the said motor comprises a solenoid (59) co-axial with an activating piston (57), the said activating piston (57) being at least partially arranged in the said solenoid (59) and being moveable in translation in the direction of the axis of the said solenoid (59).

11. Master-cylinder assembly as described in one of claims 1 to 10, **characterised by** the fact that the said predetermined rest position of the said piston (6) is a stop position of the said piston defined relative to the said master-cylinder body (2).

12. Vehicle braking system, **characterised by** the fact that it includes a master-cylinder assembly (1) as described in one of claims 1 to 11, at least one sensor (94, 95, 96, 97) to determine the value of at least one state variable (IGN, BS, P, WS) and an electronic controller (56) able to control the said actuator as a function of an instantaneous state of the said vehicle defined by the said at least one state variable.

13. Process for operating a braking system as described in claim 12 in which the said electronic controller (56) performs the steps consisting of: determining the said instantaneous state of the said vehicle from measurements of the said at least one sensor (94, 95, 96, 97); testing the presence of at least one logical closing state, each logical closing state being defined by the fact that the said at least one state variable fulfils one or more closing conditions (101, 103, 105); when the said instantaneous state of the said vehicle corresponds to a logical closing state, controlling the said actuator to adjust the said valve into the closing position (106).

14. Operating process as described in claim 13, **characterised by** the fact that the said braking system includes a pressure sensor (95) able to measure an hydraulic pressure at the output of the said master-cylinder assembly (1), a logical closing condition being a pressure condition, which condition is verified when the value emitted by the said pressure sensor (95) is below a predetermined threshold pressure (P0).

15. Operating process as described in claim 14, **characterised by** the fact that the said braking system includes an ignition sensor (97) able to determine the state of an ignition contact of the said vehicle, a logical closing condition being an ignition condition, which condition is verified when the value emitted by the said ignition sensor (97) indicates that the said ignition contact of the said vehicle is ignited.

16. Process for operating a braking system as described in claim 12, in which the said electronic controller (56) performs the steps consisting of: determining the said instantaneous state of the said vehicle from measurements of the said at least one sensor (94, 95, 96, 97); testing the presence of at least one logical opening state, each logical opening state being defined by the fact that the said at least one state variable fulfils one of more opening conditions (101, 103, 105); when the said instantaneous state of the said vehicle corresponds to a logical opening state, controlling the said actuator to adjust the said valve into the opening position (102).

17. Operating process as described in claim 16, **characterised by** the fact that the said braking system includes a pressure sensor (95) able to measure an hydraulic pressure at the output of the said master-cylinder assembly (1), a logical opening condition being a pressure condition, which condition is verified when the value emitted by the said pressure sensor is greater than a predetermined threshold pressure (P0)

18. Operating process as described in claim 16 or claim 17, **characterised by** the fact that the said braking system includes an ignition sensor (97) able to determine the state of an ignition contact of the said vehicle, a logical opening state being defined by a logical opening condition which is an ignition condition, which condition is verified when the value emitted by the said ignition sensor (97) indicates that the said ignition contact of the said vehicle is extinguished.

19. Operating process as described in one of claims 16 to 18, **characterised by** the fact that the said braking system includes a braking sensor (94) able to determine the position of a brake pedal (98) of the vehicle and a pressure sensor (95) able to measure an hydraulic pressure at the output of the said master-cylinder assembly, a logical opening state being defined by intersection between at least one logical opening condition which is a braking condition, which condition is verified when the value emitted by the said braking sensor (98) indicates that the said brake pedal is in the released position, and a logical opening condition which is a pressure condition, which condition is verified when the value emitted by the said pressure sensor (95) is greater than a predetermined threshold pressure (P0).

## Patentansprüche

1. Hauptzylinderanordnung zur hydraulischen Steuerung (1) mit einem Hauptzylinderkörper (2), in welchem eine Längsbohrung (3) ausgespart ist, wenigstens einem Kolben (6), der in der Bohrung (3) angeordnet und einerseits mit einer Dichtungsgarnitur (15), die sich in dichtem Kontakt mit einer Umfangswand der Bohrung (3) befindet und die zwei zur Aufnahme einer Flüssigkeit in der Bohrung (3) dienende Kammern (16, 29) voneinander trennt, und andererseits mit einer Rückführleitung (36), welche die Kammern (16, 29) verbindet, indem sie die Dichtungsgarnitur (15) umgeht, versehen ist, und mit einem beweglich von dem Kolben (6) getragenen Ventil (38), **dadurch gekennzeichnet, dass** die Hauptzylinderanordnung (1) einen Aktuator (54) umfasst, mit dem die Position reguliert werden kann, welche das Ventil (38) in einer vorgegebenen Ruheposition des Kolbens (6) einnimmt, wobei die Position des Ventils (38) durch den Aktuator (54) zwischen einer Offenstellung der Rückführleitung (36) und einer Verschlussstellung der Rückführleitung (36) regelbar ist.

2. Hauptzylinderanordnung gemäß Anspruch 1, **dadurch gekennzeichnet, dass** das Ventil (36) elastisch in Richtung der Verschlussposition vorgespannt ist, wobei die Hauptzylinderanordnung eine Anschlagvorrichtung (50) umfasst, die in der Bohrung (3) angeordnet ist und mit dem Ventil (38) in der Ruheposition des Kolbens (6) zusammenwirken kann, um die Offenstellung zu definieren, wobei die Anschlagvorrichtung (50) in ihrer Position von außerhalb des Hauptzylinderkörpers (2) einstellbar ist, wobei der Aktuator (54) außerhalb des Hauptzylinderkörpers (2) angeordnet ist und mit der Anschlagvorrichtung (50) zusammenwirkt, wobei der Aktuator (54) die Anschlagvorrichtung (50) in einen ersten Zustand, welcher der Offenstellung entspricht, und in einen zweiten Zustand, welcher der Verschlussstellung entspricht, positionieren kann.

3. Hauptzylinderanordnung gemäß Anspruch 2, **dadurch gekennzeichnet, dass** die Anschlagvorrichtung (50) eine Nockenfläche (51, 53) aufweist, die mit dem Ventil (38) zusammenwirken kann, um das Ventil (38) bei einer Bewegung der Anschlagvorrichtung (50) von dem zweiten Zustand in den ersten Zustand von der Verschlussstellung in die Offenstellung zu bewegen.

4. Hauptzylinderanordnung gemäß Anspruch 3, **dadurch gekennzeichnet, dass** die Anschlagvorrichtung einen drehbaren Stift (50) umfasst, welcher die Nockenfläche (51, 53) aufweist, wobei der Aktuator (54) den Stift (50) drehen kann.

5. Hauptzylinderanordnung gemäß Anspruch 4, **dadurch gekennzeichnet, dass** der Stift (50) im wesentlichen kreiszylindrisch ist und eine Schnittfläche (51) aufweist, welche die Nockenfläche definiert, wobei die Umfangsfläche des Stiftes einen kreisförmigen Abschnitt (53) aufweist, der mit dem Ventil in den ersten Zustand der Anschlagvorrichtung zusammenwirken kann, wobei die Schnittfläche (51) vorgesehen ist, in dem zweiten Zustand der Anschlagvorrichtung zu dem Ventil (38) hin gedreht zu werden.

6. Hauptzylinderanordnung gemäß Anspruch 5, **dadurch gekennzeichnet, dass** die Schnittfläche (51) auf einem Längsabschnitt (52) des Stiftes (50) vorhanden ist, welcher dem Ventil (38) gegenüberliegt.

7. Hauptzylinderanordnung gemäß einem der Ansprüche 4 bis 6, **dadurch gekennzeichnet, dass** der Aktuator (54) einen Motor (59), der einen Betätigungskolben (57) in eine Translationsbewegung versetzen kann, und eine Kurbel (58, 58'), welche die Translationsbewegung des Betätigungskolbens (57) in eine Drehbewegung des Stifts (50) umwandeln kann, umfasst.

8. Hauptzylinderanordnung gemäß einem der Ansprüche 2 bis 7, **dadurch gekennzeichnet, dass** der Aktuator (54) einen ersten Zustand aufweist, welcher dem ersten Zustand der Anschlagvorrichtung (50) entspricht, und einen zweiten Zustand, welcher dem zweiten Zustand der Anschlagvorrichtung (50) entspricht, wobei der erste und der zweite Zustand des Aktuators stabile Zustände sind.

9. Hauptzylinderanordnung gemäß einem der Ansprüche 1 bis 8, **dadurch gekennzeichnet, dass** der Aktuator (54) elektrisch arbeitet.

10. Hauptzylinderanordnung gemäß Anspruch 9, **dadurch gekennzeichnet, dass** der Motor eine koaxial zu dem Betätigungskolben (57) verlaufende Zylinderspule (59) umfasst, wobei der Betätigungskolben (57) zumindest teilweise in der Zylinderspule (59) angeordnet und translatorisch entlang der Achse der Zylinderspule (59) beweglich ist.

11. Hauptzylinderanordnung gemäß einem der Ansprüche 1 bis 10, **dadurch gekennzeichnet, dass** die vorgegebene Ruheposition des Kolbens (6) eine Anschlagsposition des Kolbens ist, die bezüglich des Hauptzylinderkörpers (2) definiert ist.

12. Bremssystem für ein Fahrzeug, **dadurch gekennzeichnet, dass** es eine Hauptzylinderanordnung (1) gemäß einem der Ansprüche 1 bis 11, wenigstens einen Messfühler (94, 95, 96, 97) zur Bestimmung des Wertes wenigstens einer Zustandsvariablen (IGN, BS, P, WS) und eine elektronische Steuerung (56) umfasst, welche den Aktuator abhängig von einem Momentanzustand des Fahrzeugs steuern kann, der durch die wenigstens eine Zustandsvariable definiert wird.

13. Verfahren zum Betrieb eines Bremssystems gemäß Anspruch 12, bei welchem die elektronische Steuerung (56) die Schritte durchführt, bestehend aus: Bestimmen des Momentanzustandes des Fahrzeugs auf der Grundlage von Messungen des wenigstens einen Messfühlers (94, 95, 96, 97); Nachweisen des Vorliegens wenigstens eines logischen Verschlusszustandes, wobei jeder logische Verschlusszustand **dadurch** definiert ist, dass die wenigstens eine Zustandsvariable eine oder mehrere Verschlussbedingungen (101, 103, 105) erfüllt; Steuern des Aktuators, um das Ventil in die Verschlussposition (106) zu stellen, wenn der Momentanzustand des Fahrzeugs einem logischen Verschlusszustand entspricht.

14. Betriebsverfahren gemäß Anspruch 13, **dadurch gekennzeichnet, dass** das Bremssystem einen Druckaufnehmer (95) umfasst, welcher einen Hydraulikdruck am Ausgang der Hauptzylinderanordnung (1) messen kann, wobei eine logische Verschlussbedingung eine Druckbedingung ist, nämlich eine Bedingung, die dann verifiziert wird, wenn der von dem Druckaufnehmer (95) gemessene Druck kleiner als eine vorgegebene Druckschwelle (P0) ist.

15. Betriebsverfahren gemäß Anspruch 14, **dadurch gekennzeichnet, dass** das Bremssystem einen Zündsensor (97) umfasst, der den Zustand eines Zündkontaktes des Fahrzeugs bestimmen kann, wobei eine logische Verschlussbedingung eine Zündbedingung ist, nämlich eine Bedingung, die verifiziert wird, wenn der von dem Zündsensor (97) gemessene Wert anzeigt, dass der Zündkontakt des Fahrzeugs eingeschaltet ist.

16. Verfahren zum Betrieb eines Bremssystems gemäß Anspruch 12, bei welchem die elektronische Steuerung (56) die Schritte durchführt, bestehend aus: Bestimmen des Momentanzustandes des Fahrzeugs auf der Grundlage von Messungen des wenigstens einen Messfühlers (94, 95, 96, 97); Nachweisen des Vorliegens wenigstens eines logischen Offenzustandes, wobei jeder logische Offenzustand **dadurch** definiert ist, dass die wenigstens eine Zustandsvariable eine oder mehrere Offenbedingungen (101, 103, 105) erfüllt; Steuern des Aktuators, um das Ventil in die Offenposition (102) zu stellen, wenn der Momentanzustand des Fahrzeugs einem logischen Offenzustand entspricht.

17. Betriebsverfahren gemäß Anspruch 16, **dadurch gekennzeichnet, dass** das Bremssystem einen Druckaufnehmer (95) umfasst, welcher einen Hydraulikdruck am Ausgang der Hauptzylinderanordnung (1) messen kann, wobei die logische Offenbedingung eine Druckbedingung ist, nämlich eine Bedingung, die dann verifiziert wird, wenn der von dem Druckaufnehmer gemessene Druck größer als eine vorgegebene Druckschwelle (P0) ist.

18. Betriebsverfahren gemäß Anspruch 16 oder Anspruch 17, **dadurch gekennzeichnet, dass** das Bremssystem einen Zündsensor (97) umfasst, der den Zustand eines Zündkontaktes des Fahrzeugs bestimmen kann, wobei ein logischer Offenzustand durch eine logische Offenbedingung definiert wird, welche eine Zündbedingung ist, nämlich eine Bedingung, die verifiziert wird, wenn der durch den Zündsensor (97) gemessene Wert anzeigt, dass der Zündkontakt ausgeschaltet ist.

19. Betriebsverfahren gemäß einem der Ansprüche 16 bis 18, **dadurch gekennzeichnet, dass** das Bremssystem einen Bremssensor (94) umfasst, welcher die Position eines Bremspedals (98) des Fahrzeugs bestimmen kann, sowie einen Drucksensor (95), der einen Hydraulikdruck am Ausgang der Hauptzylinderanordnung messen kann, wobei ein logischer Offenzustand durch die Schnittmenge definiert ist, die gebildet wird zwischen wenigstens einer logischen Offenbedingung, welche eine Bremsbedingung ist, nämlich eine Bedingung, die verifiziert wird, wenn der durch den Bremssensor (98) gemessene Wert anzeigt, dass das Bremspedal nicht gedrückt ist, und einer logischen Offenbedingung, die eine Druckbedingung ist, nämlich eine Bedingung, die verifiziert wird, wenn der von dem Drucksensor (95) gemessene Wert größer als eine vorgegebene Druckschwelle (P0) ist.
